# EUROPEAN PATENT SPECIFICATION

(11) **EP 1 327 518 B1**
(45) Date of publication and mention of the grant of the patent: **30.08.2006**
(21) Application number: 03000096.2
(22) Date of filing: 08.01.2003
(51) Int. Cl.: B32B 27/34, F16L 11/04, B32B 1/08

(54) **Nylon resin multi-layer pipe and method for adhering same**
Mehrschichtschlauch aus Nylon und Verfahren zu dessen Verkleben
Tuyau multicouche en nylon et procédé d'adhésion l'utilisant

(30) Priority: 10.01.2002 JP 2002003221
(43) Date of publication of application: 16.07.2003
(73) Proprietor: Ube Industries, Ltd., Ube-shi, Yamaguchi-ken 755-8633 (JP); OSAKA GAS CO., LTD., Osaka 541-0046 (JP)
(72) Inventor: Isobe, Noriyuki, c/o UBE Chemical Factory, Ube-shi, Yamaguchi 755-8633 (JP); Fujimura, Hideki, c/o UBE Chemical Factory, Ube-shi, Yamaguchi 755-8633 (JP); Matsuda, Shinya, c/o UBE Chemical Factory, Ube-shi, Yamaguchi 755-8633 (JP); Higuchi, Yuji, Osaka-shi, Osaka 541-0046 (JP)
(74) Representative: Grünecker, Kinkeldey, Stockmair & Schwanhäusser Anwaltssozietät

(56) References cited:
- EP-A- 1 036 968
- WO-A-90/05756
- FR-A- 2 765 520
- DATABASE WPI Section Ch, Week 198214 Derwent Publications Ltd., London, GB; Class A23, AN 1982-27755E XP002242814 & JP 57 037177 A (DAICEL CHEM INDS LTD), 1 March 1982 (1982-03-01)

## Description

The present invention relates to the use of a nylon resin multi-layer pipe which exhibits a sufficient adhesion strength when adhered to nylon resin joints using a solvent adhesive and a method for adhering the nylon resin multi-layer pipe to the nylon resin joints.

Solvent adhesives are used for adhering nylon resin moldings to each other. Solvents for use in these solvent adhesives are required to dissolve nylon to be adhered. As solvents for the solvent adhesives adapted for nylons, phenolic compounds such as phenol, cresol and chlorophenol or fluoroalcohols are currently used, but all of these are so poisonous or stimulous that they are not preferred from the standpoint of working environment.

Thus, in order to reduce toxicity of the phenolic compounds, those compounds have been used which have a phenolic hydroxyl group and one or more alkyl groups. Of these, a combination of carvacrol (2-methyl-5-isopropylphenol) and thymol (5-methyl-2-isopropylphenol) has a comparatively low toxicity and can remain liquid down to a temperature as low as -20°C depending upon composition ratio, thus being usable over a wide range of temperature. A solvent adhesive obtained by dissolving nylon in this mixed solvent of carvacrol and thymol is used for adhering a nylon gas pipe to a nylon joint.

However, in cases where an enough peel strength is required at adhesion portions between the pipe and the joint or in other uses, the current adhesion strength is not enough, and use of the adhesives has been limited.

EP-A-1036968 relates to a nylon resin multi-layer tube comprising an inner layer formed of a polyamide and a polyolefin, an intermediate layer formed from a copolyamide, and an outer layer formed from a polyamide which may be identical or different to the polyamide of the inner layer.

JP-A-57037177 discloses a resin tube having an inner layer of a polyamide, and further an outer layer of a copolyamide of a melting point of 10°C lower than that of the polyamide component of the inner layer. A braid is applied to the outer layer to provide excellent pressure resistance.

WO 90/05756 relates to a method for adhering one inert polymeric material surface to another, comprising the steps of:
(i) applying to at least one of the surfaces a composition comprising at least one compound having a phenolic hydroxyl group and one or a combination of substituents which reduce the toxicity to act as a solvent for said inert polymeric material, and
(ii) bringing said surfaces into bonding relationship. The polymeric material may be a polyamide.
   FR-A-2765520 relates to a nylon resin multi-layer structure comprising an inner layer formed from a thermoplastic polyamide and an outer layer formed from a polyamide copolymer.

It was the object of the invention to provide a nylon resin pipe which can provide an enough peel strength when adhered to nylon resin joints using a solvent adhesive.

Mechanism of adhesion using a solvent adhesive is that, first, materials to be adhered are dissolved in the solvent adhesive at the adhesion portion, and the dissolved polymer molecule chains then mutually invade into the materials to be adhered, and the solvent evaporates or is absorbed by the materials to be adhered to form a dry, solidified adhesion layer at the adhesion interface. Therefore, solvents for the solvent adhesive are essentially required to sufficiently dissolve materials to be adhered.

The invention is based on the finding that, by the use of a nylon resin multi-layer pipe comprising a layer containing a copolymerized nylon as a surface to be adhered to nylon resin joint, an adhesion layer can be more effectively formed at the adhesion interface, making it possible to improve the adhesion strength.

That is, the invention relates to the use of the following Embodiments (1) to (10):
(1) A nylon resin multi-layer pipe excellent in adhesivity to a nylon resin joint comprising at least (A) a layer containing a copolymerized nylon and (B) a layer containing a nylon resin other than the copolymerized nylon of the layer (A) wherein the surface in contact with the joint is the layer (A) containing a copolymerized nylon.
(2) The nylon resin multi-layer pipe as described in (1), wherein the copolymerized nylon comprises two or more units derived from a C₆-C₁₂ lactam, a C₆-C₁₂ aminocarboxylic acid, and a combination of a C₃-C₂₂ dicarboxylic acid and a C₂-C₂₀ diamine.
(3) The nylon resin multi-layer pipe as described in (1), wherein the layer (B) is a layer containing nylon 11 or nylon 12.
(4) The nylon resin multi-layer pipe as described in (1), wherein the outer layer is a layer containing a copolymerized nylon and the inner layer is a layer containing nylon 11 or nylon 12.
(5) The nylon resin multi-layer pipe as described in (1), wherein the inner layer is a layer containing a copolymerized nylon and the outer layer is a layer containing nylon 11 or nylon 12.
(6) The nylon resin multi-layer pipe as described in (1), wherein the outer layer and the inner layer are layers containing a copolymerized nylon and the interlayer is a layer containing nylon 11 or nylon 12.
(7) The nylon resin multi-layer pipe as described in any one of (1) to (6), wherein the copolymerized nylon contains a nylon 12 component in an amount of from 5 to 95% by weight based on the weight of the copolymerized nylon.

Fig. 1 is a sectional view illustrating the case where a pipe is adhered using a female joint;
Fig. 2 is a sectional view illustrating the case where a pipe is adhered using a male joint; and
Fig. 3 is a sectional view illustrating the case where adhesion is made using a female joint and a male joint in combination.

### Description of the Reference Numerals and Signs

- 1 ...: Female joint
- 2 ...: Outer layer
- 3 ...: Inner layer
- 4 ...: Male joint
- 5 ...: Inner layer
- 6 ...: Outer layer
- 7 ...: Female joint
- 8 ...: Male joint
- 9 ...: Outer layer
- 10 ...: Inner layer
- 11 ...: Interlayer

The invention will be further described hereinafter.

The copolymerized nylon to be used in the pipe of the invention is a copolymerized nylon comprising two kinds or more units derived from aminocarboxylic acids, lactams or a combination of diamine and dicarboxylic acid. Specifically, there are illustrated those which comprise two or more units derived from lactams containing 6 to 12 carbon atoms, aminocarboxylic acids containing 6 to 12 carbon atoms or a combination of a dicarboxylic acid containing 3 to 22 carbon atoms and a diamine containing 2 to 20 carbon atoms.

As the aminocarboxylic acid containing 6 to 12 carbon atoms, there may be used 6-aminocaproic acid, 7-aminoheptanoic acid, 8-aminooctanoic acid, 9-aminononanoic acid, 10-aminocapric acid, 11-aminoundecanoic acid, 12-aminododecanoic acid, etc.

As the lactam containing 6 to 12 carbon atoms, there may be used ε-caprolactam, ω-enantolactam, ω-undecanelactam, ω-dodecalactam, etc.

As the diamine and dicarboxylic acid, linear diamines and linear dicarboxylic acids are used but, for the purpose of decreasing crystallinity, there may be used copolymerized nylons wherein part of starting materials of nylons derived from the linear diamine and the linear dicarboxylic acid may be replaced by a branched diamine and/or a branched dicarboxylic acid.

As the linear aliphatic dicarboxylic acid, there may be used malonic acid, succinic acid, glutaric acid, adipic acid, pimelic acid, suberic acid, azelaic acid, sebacic acid, undecane dicarboxylic acid, dodecane dicarboxylic acid, tridecane dicarboxylic acid, tetradecane dicarboxylic acid, pentadecane dicarboxylic acid, hexadecane dicarboxylic acid, heptadecane dicarboxylic acid, octadecane dicarboxylic acid, nonadecane dicarboxylic acid, eicosane dicarboxylic acid, etc.

As the linear aliphatic diamine, there may be used ethylenediamine, 1,3-propanediamine, 1,4-butanediamine, 1,5-pentanediamine, 1,6-hexanediamine, 1,7-heptanediamine, 1,8-octanediamine, 1,9-nonanediamine, 1,10-decanediamine, 1,11-undecanediamine, 1,12-dodecanediamine, 1,13-tridecanediamine, 1,14-tetradecanediamine, 1,15-pentadecanediamine, 1,16-hexadecanediamine, 1,17-heptadecanediamine, 1,18-octadecanediamine, 1,19-nonadecanediamine, 1,20-eicosanediamine, etc.

As the branched aliphatic diamine, there may be used 1-butyl-1,2-ethanediamine, 1,1-dimethyl-1,4-butanediamine, 1-ethyl-1,4-butanediamine, 1,2-dimethyl-1,4-butanediamine, 1,3-dimethyl-1,4-butanediamine, 1,4-dimethyl-1,4-butanediamine, 2,3-dimethyl-1,4-butanediamine, 2-methyl-1,5-pentanediamine, 3-methyl-1,5-pentanediamine, 2,2-dimethyl-1,6-hexanediamine, 2,5-dimethyl-1,6-hexanediamine, 2,4-dimethyl-1,6-hexanediamine, 3,3-dimethyl-1,6-hexanediamine, 2,2,4-trimethyl-1,6-hexanediamine, 2,4,4-trimethyl-1,6-hexanediamine, 2,4-diethyl-1,6-hexanediamine, 2,2-dimethyl-1,7-heptanediamine, 2,3-dimethyl-1,7-heptanediamine, 2,4-dimethyl-1,7-heptanediamine, 2,5-dimethyl-1,7-peptanediamine, 2-methyl-1,8-octanediamine, 3-methyl-1,8-octanediamine, 4-methyl-1,8-octanediamine, 1,3-dimethyl-1,8-octanediamine, 1,4-dimethyl-1,8-octanediamine, 2,4-dimethyl-1,8-octanediamine, 3,4-dimethyl-1,8-octanediamine, 4,5-dimethyl-1,8-octanediamine, 2,2-dimethyl-1,8-octanediamine, 3,3-dimethyl-1,8-octanediamine, 4,4-dimethyl-1,8-octanediamine, 5-methyl-1,9-nonanediamine, etc.

As the branched aliphatic dicarboxylic acid, there may be used dimethylmalonic acid, 3,3-diethylsuccinic acid, 2,2-dimethylglutaric acid, 2-methyladipic acid, 3-methyladipic acid, trimethyladipic acid, 2-butylsuberic acid (also named 1,6-decane dicarboxylic acid), 2,3-dibutylbutane dioic acid, 8-ethyloctadecane dioic acid, 8,13-dimethyleicosadioic acid, 2-octylundecane dioic acid, 2-nonyldecane dioic acid, etc.

As the copolymerized nylon to be used in the invention as a material for the multi-layer pipe, there may be used a binary copolymerized nylon comprising two components derived from the above-described starting materials or a copolymerized nylon comprising three or more components derived from the above-described starting materials.

As the nylon to be used as the layer (A) of the multi-layer pipe of the invention, the copolymerized nylon may independently be used, or may be used as a blend of the copolymerized nylon and a homonylon or a blend of the copolymerized nylon and other copolymerized nylon. As the copolymerized nylon blend, there are illustrated, for example, a blend of the copolymerized nylon and a nylon selected from the group consisting of nylon 6, nylon 11, nylon 12, nylon 6,6, nylon 6,10 and nylon 6,12. The term "nylon 6,6" as used herein means a homonylon obtained by polymerizing a diamine containing 6 carbon atoms with a dicarboxylic acid containing 6 carbon atoms.

As specific examples of the nylon resins to be used as the layer (B) of the multi-layer pipe of the invention, there are illustrated aliphatic polyamides such as nylon 6, nylon 6,6, nylon 11 and nylon 12 and semi-aromatic polyamide resins such as polyhexamethylene terephthalamide and polyhexamethylene isophthalamide. These resins may comprise a single copolymer or a mixture of two or more copolymers.

The copolymerized nylon and other nylon resins to be used in the multi-layer pipe of the invention may be used comprising additives such as heat-resistant material, weathering-resistant material, oxidation inhibitor, ultraviolet absorber, fire retardant, impact resistance-imparting agent, antistatic agent, plasticizer, nucleating agent and lubricant incorporated therein as necessary.

Further, the copolymerized nylon and other nylon resins to be used in the multi-layer pipe of the invention may be used comprising reinforcements such as glass fiber, inorganic fiber, organic fiber and carbon black incorporated therein as necessary.

Moreover, the copolymerized nylon and other nylon resins to be used in the multi-layer pipe of the invention may be used comprising coloring materials such as pigment and dye incorporated therein as necessary.

As specific examples of the material of the nylon resin joint to be adhered to the multi-layer pipe of the invention, there are illustrated aliphatic polyamides such as nylon 6, nylon 6,6, nylon 11 and nylon 12 and semi-aromatic polyamide resins such as polyhexamethylene terephthalamide and polyhexamethylene isophthalamide. These resins may comprise a single polymer or a mixture of two or more copolymers.

In the invention, the nylon resin joint and the aforementioned nylon resin multi-layer pipe are adhered to each other using a solvent adhesive.

As the solvent adhesive to be used in the adhesion of the multi-layer pipe of the invention to nylon resin joint, those adhesives may be used which comprise a solvent capable of dissolving nylon resins to be used in pipes or joints, such as a phenolic compound (e.g., phenol, alkylphenol, etc.) and a fluoroalcoholic compound.

As the phenolic compounds, there are illustrated phenol, o-cresol, m-cresol, p-cresol, o-ethylphenol, methylphenol, p-ethylphenol, o-propylphenol, m-propylphenol, o-isopropylphenol, m-isopropylphenol, p-isopropylphenol, o-n-butylphenol, m-n-butylphenol, p-n-butylphenol, o-sec-butylphenol, m-sec-butylphenol, p-sec-butylphenol, o-tert-butylphenol, m-tert-butylphenol, p-tert-butylphenol, 4-amylphenol, 4-octylphenol, 4-tert-octylphenol, 4-nonylphenol, 4-dodecylphenol, 2,3-dimethylphenol, 2,4-dimethylphenol, 2,5-dimethylphenol, 2,6-dimethylphenol, 3,4-dimethylphenol, 3,5-dimethylphenol, 4-isopropyl-3-methylphenol, 5-isopropyl-2-methylphenol (also called carvacrol), 6-isopropyl-3-methylphenol (also called thymol), 2-tert-butyl-4-methylphenol, 6-tert-butyl-3-methylphenol, 6-tert-butyl-2-methylphenol, 6-tert-butyl-2,4-dimethylphenol, 4,6-tert-butyl-3-methylphenol, resorcinol, 2-methylresorcinol, 4-methylresorcinol, 5-methylresorcinol, 2-ethylresorcinol, 4-ethylresorcinol, 5-ethylresorcinol, 2-butylresorcinol, 4-butylresorcinol, 5-butylresorcinol, 2-amylresorcinol, 4-amylresorcinol, 5-amylresorcinol, 2-hexylresorcinol, 4-hexylresorcinol, 5-hexylresorcinol, 2-heptylresorcinol, 4-heptylresorcinol, 5-heptylresorcinol, 2-octylresorcinol, 4-octylresorcinol, 5-octylresorcinol, 2-nonylresorcinol, 4-nonylresorcinol, 5-nonylresorcinol, 2-dodecylresorcinol, 4-dodecylresorcinol, 5-dodecylresorcinol, catechol, 3-methylcatechol, 4-methylcatechol, hydroquinone, 1,2,3-trihydroxybenzene (also called pyrogallol) and 1,3,5-trihydroxybenzene (also called phloroglucinol).

As the fluoroalcoholic compounds, there are illustrated 1,1,1,3,3,3-hexafluoroisopropanol, and 1,1,1-trifluoroethanol.

Of these, a combination of carvacrol (2-methyl-5-isopropylphenol) and thymol (5-methyl-2-isopropylphenol) is preferred, because it shows a comparatively low toxicity and can remain liquid to below -20°C depending upon the composition ratio, thus permitting to use over a wide range of temperature.

In the invention, a solvent adhesive containing a nylon resin, in particular, a copolymerized nylon is preferred as the solvent adhesive. Incorporation of the copolymerized nylon enables formation of an adhesive layer at the adhesion interface with more effectivity, thus adhesion strength being improved.

As the copolymerized nylon, there may be used those copolymerized nylons which comprise two kinds or more units derived from a lactam containing 6 to 12 carbon atoms, an aminocarboxylic acid containing 6 to 12 carbon atoms, or a combination of a dicarboxylic acid containing 3 to 22 carbon atoms and a diamine containing 2 to 20 carbon atoms.

Concentration of the copolymerized nylon contained in the adhesive is preferably 0.5 to 20% by weight based on the total weight of the adhesive. In case where concentration of the copolymerized nylon is less than 0.5% by weight, viscosity of the resulting adhesive becomes too low that it tends to run upon application, thus being difficult to handle. On the other hand, in case where concentration of the copolymerized nylon becomes more than 20% by weight, viscosity becomes so high that it becomes difficult to handle and that it takes long before solidification.

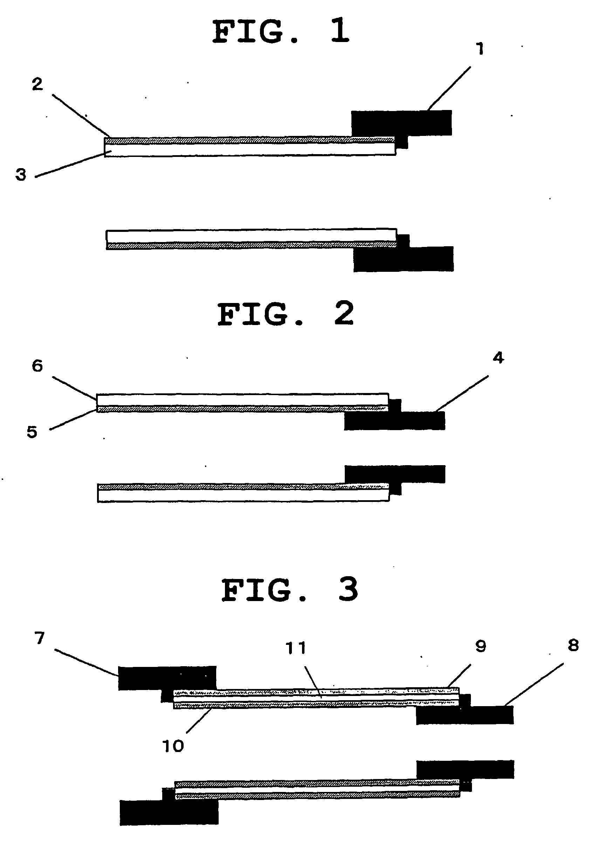

In the multi-layer pipe of the invention, as shown in Fig. 1, in the case where a female joint 1 and a pipe are adhered to each other using a solvent adhesive, the use of a nylon resin multi-layer pipe comprising an outer layer 2 in contact with the joint made of a copolymerized nylon and an inner layer 3 made of other nylon resins makes it possible to realize an excellent peel strength. As shown in Fig. 2, in the case where a male joint 4 and a pipe are adhered to each other using a solvent adhesive, the use of a nylon resin multi-layer pipe comprising an inner layer in contact with the joint made of a copolymerized nylon and an outer layer made of other nylon resins makes it possible to realize an excellent peel strength. As shown in Fig. 3, in the case where a female joint 7 and a male joint 8 are adhered in combination to a pipe using a solvent adhesive, the use of a nylon resin multi-layer pipe comprising an inner layer 9 and an outer layer 10 which are each in contact with the joint and made of a copolymerized nylon and an interlayer 11 made of other nylon resins makes it possible to realize an excellent peel strength.

The invention will be explained below in more detail by reference to the following Examples and Comparative Examples, but the invention should not be construed as being limited thereto.

Tensile test specimens (Type 1) were prepared according to ASTM D638 using nylon 12 or copolymerized nylon, which were referred to as materials A to be adhered. Then, pressed sheets prepared by compression molding were cut into 12.7 mm X 120 mm X 0.6 mmt test specimens, which were referred to as materials B to be adhered. Among these materials B, two-layer formed sheets were prepared in such a manner that they have a total thickness of 0.6 mm and comprise a nylon layer 12 having a thickness of 0.5 mm and a copolymerized nylon layer having a thickness of 0.1 mm. The material A to be adhered and the material B to be adhered were adhered to each other using a solvent adhesive. The margin for adhesion was 50 mm. The laminate thus formed was cured for 6 days, and then subjected to peeling test. The distance between grips was 40 mm, and the rate of pulling was 200 mm/min.

### EXAMPLE 1

The material A to be adhered was prepared from nylon 12. The material B to be adhered was prepared as a two-layer formed sheet comprising nylon 12 and copolymerized nylon A (nylon 6/nylon 12 = 40/60). The material A to be adhered and the material B to be adhered were adhered to each other using an adhesive A (10% by weight solution of nylon 11 in carvacrol/thymol = 2/1), and then subjected to peeling test.

### EXAMPLE 2

The material A to be adhered was prepared from copolymerized nylon A (nylon 6/nylon 12 = 40/60). The material B to be adhered was prepared as a two-layer formed sheet comprising nylon 12 and copolymerized nylon A (nylon 6/nylon 12 = 40/60). The material A to be adhered and the material B to be adhered were adhered to each other using an adhesive A (10% by weight solution of nylon 11 in carvacrol/thymol = 2/1), and then subjected to peeling test.

### EXAMPLE 3

The material A to be adhered was prepared from copolymerized nylon B (nylon 6/nylon 12 = 25/75). The material B to be adhered was prepared as a two-layer formed sheet comprising nylon 12 and copolymerized nylon A (nylon 6/nylon 12 = 40/60). The material A to be adhered and the material B to be adhered were adhered to each other using an adhesive A (10% by weight solution of nylon 11 in carvacrol/thymol = 2/1), and then subjected to peeling test.

### EXAMPLE 4

The material A to be adhered was prepared from copolymerized nylon A (nylon 6/nylon 12 = 40/60). The material B to be adhered was prepared as a two-layer formed sheet comprising nylon 12 and copolymerized nylon A (nylon 6/nylon 12 = 40/60). The material A to be adhered and the material B to be adhered were adhered to each other using an adhesive B (5% by weight solution of copolymerized nylon A in methanol/resorcinol = 6/4), and then subjected to peeling test.

### COMPARATIVE EXAMPLE 1

Both the materials A and B to be adhered were prepared from nylon 12. The material A to be adhered and the material B to be adhered were then adhered to each other using an adhesive A (10% by weight solution of nylon 11 in carvacrol/thymol = 2/1), and then subjected to peeling test.

### COMPARATIVE EXAMPLE 2

The material A to be adhered was prepared from nylon 12 and the material B to be adhered was prepared from copolymerized nylon A (nylon 6/nylon 12 = 40/60). The material A to be adhered and the material B to be adhered were then adhered to each other using an adhesive A (10% by weight solution of nylon 11 in carvacrol/thymol = 2/1), and then subjected to peeling test.

### COMPARATIVE EXAMPLE 3

The material A to be adhered was prepared from nylon 12 and the material B to be adhered was prepared from copolymerized nylon B (nylon 6/nylon 12 = 25/75). The material A to be adhered and the material B to be adhered were then adhered to each other using an adhesive A (10% by weight solution of nylon 11 in carvacrol/thymol = 2/1), and then subjected to peeling test.

### COMPARATIVE EXAMPLE 4

The material A to be adhered was prepared from nylon 12 and the material B to be adhered was prepared from copolymerized nylon C (nylon 6/nylon 12 = 80/20). The material A to be adhered and the material B to be adhered were then adhered to each other using an adhesive A (10% by weight solution of nylon 11 in carvacrol/thymol = 2/1), and then subjected to peeling test.

**Table 1**

| | Material A to be adhered | Material B to be adhered | Adhesive | Peel strength (N) |
|---|---|---|---|---|
| Example 1 | Nylon 12 | Two-layer formed product-1 | Adhesive A | 171.3 |
| Example 2 | Copolymerized nylon A | Two-layer formed product-1 | Adhesive A | 160.3 |
| Example 3 | Copolymerized nylon B | Two-layer formed product-1 | Adhesive A | 165.8 |
| Example 4 | Copolymerized nylon A | Two-layer formed product-1 | Adhesive B | 192.9 |
| Comparative Example 1 | Nylon 12 | Nylon 12 | Adhesive A | 9.0 |
| Comparative Example 2 | Nylon 12 | Copolymerized nylon A | Adhesive A | 105.1 |
| Comparative Example 3 | Nylon 12 | Copolymerized nylon B | Adhesive A | 106.1 |
| Comparative Example 4 | Nylon 12 | Copolymerized nylon C | Adhesive A | 86.5 |

In Examples 2 and 3, the material B underwent break.

The use of the nylon resin multi-layer pipe of the invention makes it possible to form an adhesion layer effective in the adhesion with a solvent adhesive and thus allows use in purposes requiring a strong peel strength.

## Claims

1. Use of a nylon resin multi-layer pipewhich is excellent in adhesivity to a nylon resin joint, comprising at least (A) a layer comprising a copolymerized nylon and (B) a layer comprising a nylon resin other than the copolymerized nylon of the layer (A) wherein the surface in contact with the joint is the layer (A) comprising a copolymerized nylon, as a nylon resin pipe for adhering to the nylon resin joint using a solvent adhesive.

2. The use of the nylon resin multi-layer pipe according to claim 1, wherein the copolymerized nylon comprises two or more units derived from a C₆-C₁₂ lactam, a C₆₋C₁₂ aminocarboxylic acid, and a combination of a C₃-C₂₂ dicarboxylic acid and a C₂-C₂₀ diamine.

3. The use of the nylon resin multi-layer pipe according to claim 1, wherein the layer (B) is a layer comprising nylon 11 or nylon 12.

4. The use of the nylon resin multi-layer pipe according to claim 1, wherein the outer layer is a layer comprising a copolymerized nylon and the inner layer is a layer comprising nylon 11 or nylon 12.

5. The use of the nylon resin multi-layer pipe according to claim 1, wherein the inner layer is a layer comprising a copolymerized nylon and the outer layer is a layer comprising nylon 11 or nylon 12.

6. The use of the nylon resin multi-layer pipe according to claim 1, wherein the outer layer and the inner layer are layers comprising a copolymerized nylon and the interlayer is a layer comprising nylon 11 or nylon 12.

7. The use of the nylon resin multi-layer pipe according to claim 1, wherein the copolymerized nylon comprises a nylon 12 component in an amount of from 5 to 95% by weight based on the weight of the copolymerized nylon.

## Patentansprüche

1. Verwendung eines Mehrschichtschlauchs aus Nylonharz, welcher ausgezeichnet in der Haftung zu einem Anschlussstück aus Nylonharz ist, umfassend mindestens (A) eine Schicht umfassend ein copolymerisiertes Nylon und (B) eine Schicht umfassend ein Nylonharz, welches ein anderes Nylonharz als das copolymerisierte Nylonharz der Schicht (A) ist, wobei die Oberfläche in Kontakt mit dem Anschlauchstück die Schicht (A) ist, umfassend ein copolymerisiertes Nylon, als ein Mehrschichtschlauch aus Nylonharz zur Haftung an einem Anschlussstück aus Nylon harz unter Verwendung eines Lösungsmittelklebstoffs.

2. Verwendung des Mehrschichtschlauchs aus Nylonharz gemäß Anspruch 1, worin das copolymerisierte Nylon zwei oder mehr Einheiten umfasst, welche abgeleitet sind von einem C₆-C₁₂ Lactam, einer C₆-C₁₂ Aminocarbonsäure, und einer Kombination einer C₃-C₂₂ Dicarbonsäure und einem C₂-C₂₀ Diamin.

3. Verwendung des Mehrschichtschlauchs aus Nylonharz gemäß Anspruch 1, worin die Schicht (B) eine Schicht ist, die Nylon 11 oder Nylon 12. umfasst.

4. Verwendung des Mehrschichtschlauchs aus Nylonharz gemäß Anspruch 1, wobei die äußere Schicht eine Schicht ist, welche ein copolymerisiertes Nylon umfasst, und die innere Schicht ist eine Schicht ist, die Nylon 11 oder Nylon 12 umfasst.

5. Verwendung des Mehrschichtschlauchs aus Nylonharz gemäß Anspruch 1, worin die innere Schicht eine Schicht ist, welche ein copolymerisiertes Nylon umfasst, und die äußere Schicht ist eine Schicht ist, welche Nylon 11 oder Nylon 12 umfasst.

6. Verwendung des Mehrschichtschlauchs aus Nylonharz gemäß Anspruch 1, worin die äußere Schicht und die innere Schicht Schichten sind, die ein copolymerisiertes Nylon umfassen, und worin die Zwischenschicht ist eine Schicht ist, die Nylon 11 oder Nylon 12 umfasst.

7. Verwendung des Mehrschichtschlauchs aus Nylonharz gemäß Anspruch 1, worin das copolymerisierte Nylon eine Nylon 12-Komponente in einer Menge von 5 bis 95 Gew.-% umfasst, basierend auf dem Gewicht des copolymerisierten Nylons.

## Revendications

1. Utilisation d'un tuyau multicouche en résine nylon, dont l'adhésivité à un raccord en résine nylon est excellente, comprenant au moins (A) une couche comprenant un nylon copolymérisé et (B) une couche comprenant une résine nylon autre que le nylon copolymérisé de la couche (A), la surface en contact avec le raccord étant la couche (A) comprenant un nylon copolymérisé, comme tuyau en résine nylon à faire adhérer au raccord en résine nylon en utilisant un adhésif à base de solvant.

2. Utilisation du tuyau multicouche en résine nylon selon la revendication 1, dans laquelle le nylon copolymérisé comprend deux ou plusieurs motifs dérivés d'un lactame en C₆ à C₁₂, d'un amino-acide carboxylique en C₆ à C₁₂ et d'une combinaison d'un acide dicarboxylique en C₃ à C₂₂ et d'une diamine en C₂ à C₂₀.

3. Utilisation du tuyau multicouche en résine nylon selon la revendication 1, dans laquelle la couche (B) est une couche comprenant du nylon 11 ou du nylon 12.

4. Utilisation du tuyau multicouche en résine nylon selon la revendication 1, dans laquelle la couche extérieure est une couche comprenant un nylon copolymérisé et la couche intérieure est une couche comprenant du nylon 11 ou du nylon 12.

5. Utilisation du tuyau multicouche en résine nylon selon la revendication 1, dans laquelle la couche intérieure est une couche comprenant un nylon copolymérisé et la couche extérieure est une couche comprenant du nylon 11 ou du nylon 12.

6. Utilisation du tuyau multicouche en résine nylon selon la revendication 1, dans laquelle la couche extérieure et la couche intérieure sont des couches comprenant un nylon copolymérisé et la couche intermédiaire est une couche comprenant du nylon 11 et du nylon 12.

7. Utilisation du tuyau multicouche en résine nylon selon la revendication 1, dans laquelle le nylon copolymérisé comprend un composant nylon 12 en une quantité de 5 à 95 % en poids par rapport au poids du nylon copolymérisé.
